# EUROPEAN PATENT SPECIFICATION

(11) **EP 1 488 960 B1**
(45) Date of publication and mention of the grant of the patent: **10.05.2006**
(21) Application number: 03076885.7
(22) Date of filing: 17.06.2003
(51) Int. Cl.: B60R 21/01, B60K 28/14

(54) **System layout and trigger logic for active pedals**
Systemanordnung und Auslöselogik für aktive Pedale
Disposition d'un système et activation logique pour pédales actives

(43) Date of publication of application: 22.12.2004
(73) Proprietor: Ford Global Technologies, LLC, Dearborn, MI 48126 (US)
(72) Inventor: Tivesten, Emma, 428 35 Kallered (SE); Persson, Jörgen, 413 22 Göteborg (SE); Gripenland, Mattias, 417 03 Göteborg (SE); Larsson, Christian, 436 45 Askim (SE); Lindman, Magdalena, 449 51 Alafors (SE); Karlsson, Tomas, 444 42 Stenungsund (SE); Wallin, Andreas, 427 38 Billdal (SE)
(74) Representative: Hammond, Andrew David

(56) References cited:
- DE-A- 10 065 518
- DE-A- 19 961 799
- DE-C- 10 132 681
- US-A- 6 031 484
- US-A1- 2003 100 983
- US-B1- 6 519 519

## Description

### TECHNICAL FIELD

The present invention relates to a system and a method for determining whether and/or when to activate a safety-related feature of a vehicle in the event of an imminent collision between the vehicle and a foreign object.

### BACKGROUND OF THE INVENTION

Modern vehicles are designed to protect vehicle occupants in the event of a collision between the vehicle and a foreign object, such as another vehicle, or a fixed object such as a tree, lamppost, etc. To this end, modern vehicles are equipped with various safety-related features that may be deployed if a collision occurs. Examples of such safety-related features include airbags and curtains, pyrotechnic seatbelt tensioners, seat adjusters which adjust the seats to a more collision-favourable position, automatic emergency service call-up, etc.

Traditional systems for deploying safety-related features in vehicles rely on one or more sensors for detecting whether a collision of a certain type has occurred. Upon detection of such a collision, relevant data is sent to a system control unit which determines which safety-feature or features is/are to be deployed. For such systems to operate effectively, it is of paramount importance that the system is able to react sufficiently quickly in the event of a collision. On the other hand, a certain amount of time is demanded by the system to determine which features are to be deployed. DE 10132681C shows the features of the preamble of claims 1 and 9.

### SUMMARY OF THE INVENTION

It is therefore an object of the present invention to provide a system for determining whether and/or when to activate a safety-related feature of a vehicle in the event of an imminent collision between the vehicle and a foreign object, which system is capable of more efficiently utilising the time available for determining whether and/or when to activate the safety-related feature.

In accordance with the present invention, this object is achieved by a system for determining whether and/or when to activate a safety-related feature of a vehicle in the event of an imminent collision between the vehicle and a foreign object with the features of claim 1.

It is a further object of the present invention to provide a method for determining whether and/or when to activate a safety-related feature of a vehicle in the event of an imminent collision between the vehicle and a foreign object, which method more efficiently utilises the time available for determining whether and/or when to activate the safety-related feature.

This further object is achieved in accordance with the present invention by a method for determining whether and/or when to activate a safety-related feature of a vehicle in the event of an imminent collision between the vehicle and a foreign object with the features of claim 9.

The system and method of the present invention are based on the insight that a vehicle may be subjected to various types of collision, the risk of injury to occupants being dependent on the type and severity of the collision. Thus, the present invention makes use of data relating to the position of a foreign object relative to the vehicle, as well as the relative velocity between the vehicle and the foreign object, to vary, depending on at least some of this data, the passage of time from receiving the data in a system control unit to emitting a signal to activate the safety-related feature. As will be explained in greater detail below, this implies that a maximum period of time for collecting data and taking a decision can be utilised by the system, thereby rendering the final decision more reliable.

Preferred embodiments of the system and method of the present invention are detailed in the respective dependent claims.

### BRIEF DESCRIPTION OF DRAWINGS

The invention will be described in greater detail in the following by way of example only and with reference to the attached drawings, in which:
- Fig. 1: is a schematic view of a vehicle equipped with the system according to the present invention;
- Fig. 2: is a schematic bock diagram illustrating various components constituting the system of one embodiment of the present invention;
- Fig. 3: is a flow chart illustrating various steps of the method according to the present invention;
- Fig. 4: is a plot of delta velocity (dV) versus time (t) for a second threshold determination;
- Fig. 5: is a plot of delta velocity (dV) versus time (t) for a third threshold determination, and
- Fig. 6: is a flow chart of a method in a crash protection system according to an embodiment of the invention, showing pedal triggering.

### DETAILED DESCRIPTION OF PREFERRED EMBODIMENTS

As required, detailed embodiments of the present invention are disclosed herein; however, it is to be understood that the disclosed embodiments are merely examples of the invention that may be further embodied in various and alternative forms other than described below. The drawings are not necessarily to scale, and some features and elements because of simplicity illustrated as blocks may be exaggerated or minimized. Therefore, specific structural and functional details disclosed herein are not to be interpreted as limiting in any sense, but merely form a basis for the claims and as a representative basis for enabling one skilled in the art to variously put the present invention into practice.

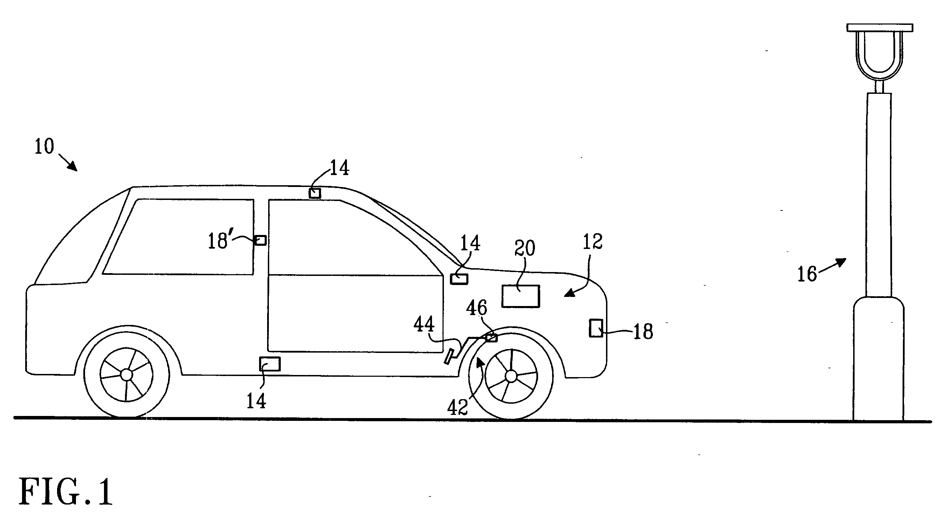

In Fig. 1, reference numeral 10 generally denotes a vehicle equipped with a system, generally denoted by 12, for determining whether and/or when to activate one or more safety-related features 14 of the vehicle in the event of an imminent collision between the vehicle and a foreign object 16. In the drawing, the foreign object 16 is depicted as a lamppost, though it is to be understood that the foreign object may be constituted by any stationary or moving object above a certain size. Examples of such objects include other vehicles, pedestrians, cyclists, prams, signposts, buildings, bridge supports, crash barriers, etc. However, small animals such as rodents, small stones, puddles and the like are not normally to be considered as detectable foreign objects. Similarly, the safety-related features 14 of the vehicle have been illustrated in Fig. 1 in a purely schematic manner. In reality, these features may be constituted by, for example, airbags and curtains, pyrotechnic seatbelt tensioners, seat adjusters which adjust the seats to a more collision-favourable position, automatic emergency service call-up, steering-wheel retractors, automatic braking and the like. Indeed, the present invention is highly suitable for deciding whether and/or when to activate release of foot-operated pedals, as will be described in further detail later.

By the expression "imminent collision" it is meant that the system 12 has determined that a collision is unavoidable and that impact is to be expected within a fraction of one second.

The system 12 of the present invention comprises detecting means 18 for determining the position of the foreign object 16 relative to the vehicle 10 and for determining the relative velocity between the vehicle and the foreign object. The detecting means 18 may be constituted by one or more pre-crash sensors typically operating with laser technology, though other suitable sensor technoiogy (fulfilling safety requirements, etc.) based on radar or infrared could be provided instead. Any suitable sensor measuring, for instance; clearance to forward vehicles, motions thereof and providing information relating to the position of such vehicles can thus be employed. For example, one or more sensors including also cruise control features could be provided instead or in combination with the described pre-crash sensor(s). However, because of simplicity, in the following, only a laser sensor (a so-called "Cv" sensor) will be described, but without any intention to limit the invention to this particular type of sensor.

The detecting means 18 are typically mounted at the front of the vehicle so that foreign objects in the direction of normal travel of the vehicle may be detected. It is to be understood,'however, that the expression "detecting means" is intended to encompass sensors mounted at any location on the vehicle. For example, so-called "B-pillar" sensors may be provided, as schematically denoted by reference sign 18' in Fig. 1, preferably in combination with one or more forward-facing pre-crash sensors. As its name implies, a B-pillar sensor is mounted on the B-pillar of the vehicle and can provide x-direction acceleration measurements in a conventional way, for instance by means of accelerometers. Such sensors may be used to give still better information, as in this case to provide optimal offset detection. However, since such sensors are of conventional type, the function thereof will not be described in any further detail.

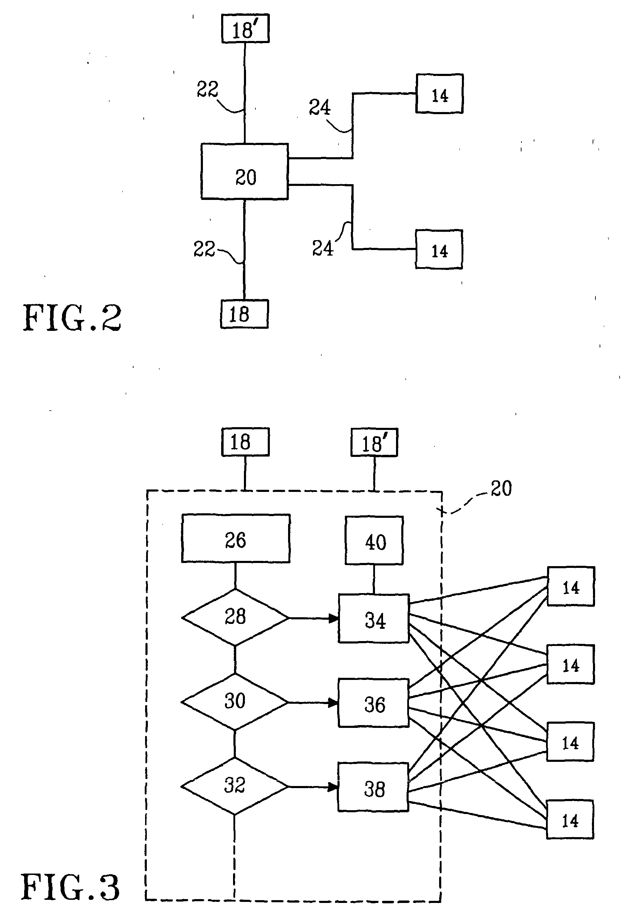

The system of the present invention further comprises a system control unit 20 arranged to communicate with the detecting means 18, 18'. As is most clearly illustrated in Fig. 2, the system control unit 20 is arranged to receive data from the detecting means relating to the position and the relative velocity of a foreign object with respect to the vehicle. The detecting means 18, 18'are arranged to communicate with the system control unit via any suitable first communication link 22, for example a data bus or wireless path such as attained by using "bluetooth" technology. Based on at least some of the data received from the detecting means 18, 18', the system control unit 20 is arranged to determine whether and/or when to emit a signal to activate one or more safety-related features 14. To this effect, the system control unit 20 communicates with the safety-related features via any suitable second communication link 24, for example a data bus or wireless path such as attained by using "bluetooth" technology.

In accordance with the present invention, the system control unit 20 is arranged to dynamically set a discrimination factor dependent on at least some of the data it receives from one or more of the detecting means 18, 18' to thereby vary, dependent on at least some of the data, the passage of time from receiving the data to emitting the signal to activate the safety-related feature or features. Thus, the term "dynamically set" implies that different discrimination factors will be set dependent on at least one variable.

In a particular embodiment of the invention, the discrimination factor is a threshold determination. The threshold determination is an algorithm implemented by the system control unit 20 in response to certain of the collected data from the detecting means meeting predetermined criteria such as, for example, relative velocity range and position of the foreign object with respect to the vehicle. Preferably, the system control unit 20 is arranged to select between a plurality of threshold determinations dependent on the relative velocity of the vehicle with respect to a detected foreign object. Thus, in the method according to the present invention, and as is illustrated schematically in Fig. 3, the detecting means 18, 18' provide the system control unit 20 with data relating to i.a. the relative velocity of the vehicle with respect to a foreign object. The system control unit determines the relative velocity immediately preceding a collision with the foreign object in box 26. In one embodiment, the determined relative velocity is analysed to ascertain within which predetermined relative velocity range it lies. Alternatively, the absolute value of the determined relative velocity may be used. In Fig. 3, three consecutive relative velocity ranges are depicted, namely a first relative velocity range 28, a second relative velocity range 30 and a third relative velocity range 32. However, it is to be understood that the principles of the present invention can be applied to a system and method utilising any number of relative velocity ranges or absolute values of relative velocity. Each relative velocity range is associated with a threshold determination 34, 36, 38 respectively. As will be explained in the following, each threshold determination comprises signal emission time delays dependent on the determined position of the foreign object relative to the vehicle.

Thus, and as has been mentioned earlier, the detecting means 18, 18' provide the system control unit 20 with data relating to the position of the foreign object with respect to the vehicle. This information is analysed in box 40 of Fig. 3. Preferably, the detecting means are capable of detecting, and distinguishing between, a full frontal collision, a corner-to-corner collision and an offset collision. Each threshold determination 34, 36, 38 comprises a dedicated signal emission time delay for each of a detected full frontal collision, a corner-to-corner collision and an offset collision. For low relative velocities, for example the first relative velocity range 28 is from 0 to 40 km/h, the first threshold determination 34 may comprise dedicated signal time delays, all of which are infinite. In other words, the system control unit 20 will not emit a signal to activate any of the safety-related features. This means that the system control unit has determined that the type and velocity of impact is such that risk of injury to the vehicle occupant(s) is negligible and that deployment of any safety-related feature could conceivably aggravate injury and/or inflict unnecessary damage to e.g. interior fittings such as the steering wheel or dashboard.

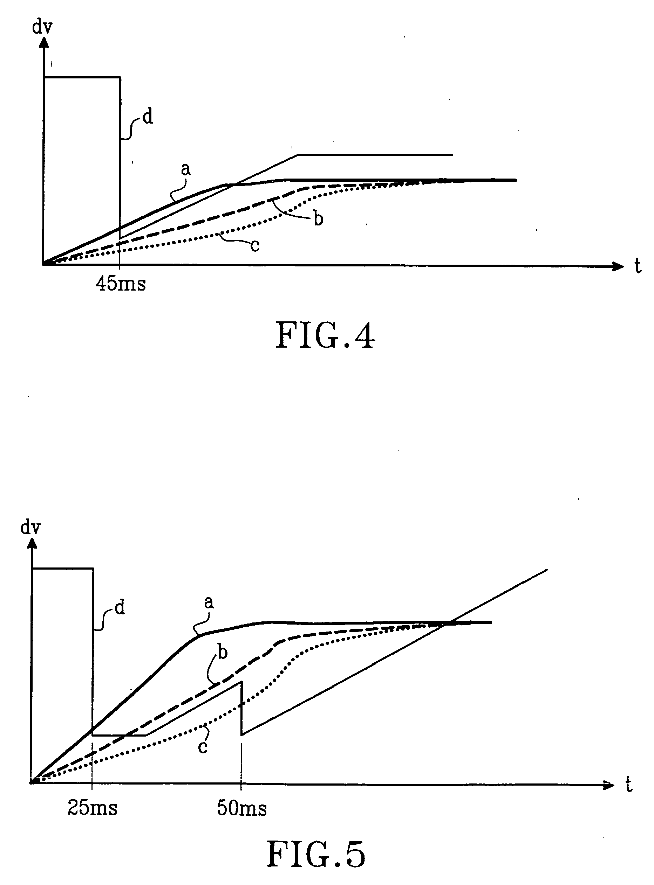

Boxes 36 and 38 of Fig. 3 represent threshold determinations for second and third relative velocity ranges 30, 32 respectively. Each of Figs. 4 and 5 illustrates plots of delta velocity (dV) versus time (t) for a respective threshold determination. Purely by way of example, Fig. 4 relates to a second threshold determination for a relative velocity in the range of about 41 km/h to about 50 km/h, in this case about 45 km/h, and Fig. 5 relates to a third threshold determination for a relative velocity in the range of about 51 km/h to about 65 km/h, in this case about 60 km/h. In each of Figs. 4 and 5, curve (a) represents a full frontal collision, curve (b) a corner-to-corner collision and curve (c) an offset collision. A triggering curve is denoted by (d).

Considering firstly Fig. 4, it will be apparent that curve (a) crosses the triggering curve (d) at a time value of 45 ms. This implies that, for a full frontal collision at a relative velocity of about 45 km/h, the system of the present invention will set a signal emission time delay of 45 ms. Thus, during this period, the system control unit is given time to collect and process information from various sensors to decide which safety-related feature or features to activate. For example, the system could be arranged to activate an airbag in the steering wheel of the vehicle, but not an airbag in the dashboard on the passenger side of the vehicle, even if a passenger is detected as being present. Of course, each safety-related feature of the vehicle can be ascribed its own dedicated curve for each threshold determination. In this manner, a decision to activate, for example, a seatbelt tensioner may be taken before deciding whether an airbag is to be deployed. Curves (b) and (c) of Fig. 4 show that, for a relative velocity of about 45 km/h and for a corner-to-corner collision and an offset collision, the dedicated signal emission time delay will be infinite, i.e. no safety-related feature will be activated for these types of collision at this velocity.

Turning to Fig. 5, it will be apparent that curve (a) crosses the triggering curve (d) at a time value of 25 ms. In other words, the system has less time to decide which safety-related feature or features to activate in this relative velocity range than in that illustrated in Fig. 4. Curve (b) crosses the triggering curve (d) some 10 ms later, i.e. the system control unit is given more time to collect and process information from various sensors to decide which safety-related feature or features to activate for this type of collision compared to a full frontal collision. Finally, curve (c) crosses the triggering curve (d) at a time value of 50 ms.

A comparison between Fig. 4 and Fig. 5 reveals that, in accordance with a particular embodiment of the method according to the present invention, signal emission time delays of the third threshold determination 38 are, on average, less than the signal emission time delays of the second threshold determination 36. It will also be apparent that the signal emission time delay for a full frontal collision is shorter than for a corner-to-corner collision and an offset collision, thus reflecting the fact that risk of injury is often greater in a full frontal collision.

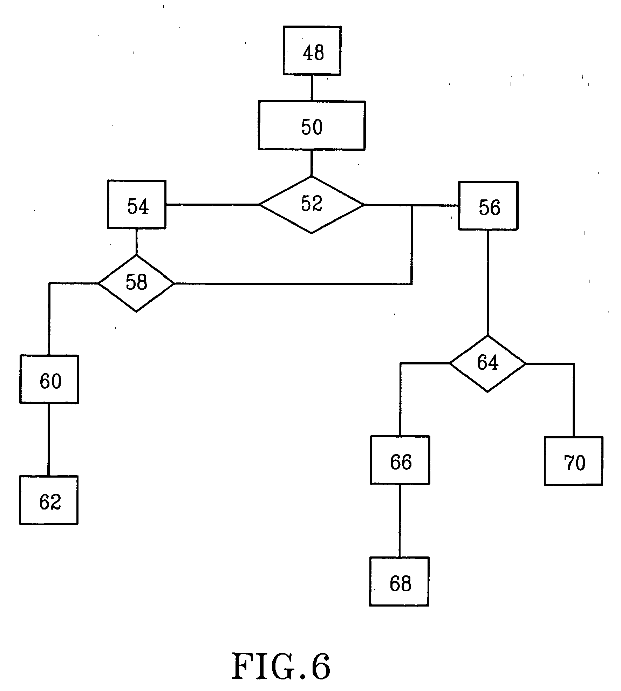

The system and method described above are eminently suitable for use in a driver crash protection system in which the vehicle is equipped with foot-operated pedals which can be released and/or retracted in the event of a collision. Such an arrangement is schematically illustrated at 42 in Fig. 1, with reference numeral 44 denoting a pedal and reference numeral 46 denoting an actuator for releasing and/or retracting the pedal. Fig. 6 illustrates the various decision steps which the system control unit has to work through to decide whether and/or when to activate the actuator 46 of the pedal 44. This aspect of the present invention is the subject of an independent European patent application filed simultaneously with this application.

In Fig. 6, box 48 represents the system control unit 20 having decided that a collision is imminent. At box 50, the system collects data from one or more suitable sensors to ascertain whether the driver has his/her foot on a pedal. If at box 52 it is determined that a foot is on a pedal, a first sub-routine at 54 is run. This first sub-routine calculates the risk for acceleration-related injuries. A decision is taken in this sub-routine in a comparatively short time, typically within 25 ms. If at 52 it is determined that no foot is on a pedal, a second sub-routine at 56 is run. This second sub-routine calculates the risk of pedal intrusion further into the passenger compartment as a result of the imminent collision. A decision is taken in this sub-routine in a comparatively long time, typically within 50 ms. This implies that the system is firstly able to determine the risk for acceleration-related injuries and, if it is determined at 58 that this risk can be ignored, the second sub-routine at 56 is run. If, however, it is determined at 58 that the risk for acceleration-related injuries is present, the system control unit 20 emits a signal at 60 to activate the safety-related feature in the form of the actuator 46 for the pedal 44. Since the pedal has thus been released and/or retracted, the system control unit 20 also activates automatic emergency braking at 62.

In the event that the second sub-routine 56 is run, and it is decided at 64 that there exists a risk of pedal intrusion, the system control unit 20 emits a signal at 66 to activate the safety-related feature in the form of the actuator 46 for the pedal 44. Since the pedal has thus been released and/or retracted, the system control unit 20 also activates automatic emergency braking at 68. If, however, it is decided that the risk of pedal intrusion can be ignored, no signal is sent to the actuator 46, as indicated by box 70.

While preferred embodiments of the invention have been disclosed in detail, it should be understood by those skilled in the art that various other modifications may be made to the illustrated embodiments without departing from the invention as described in the specification and defined in the appended claims. For instance, the system and method could be used in conjunction with an open-top vehicle to ascertain the need to activate safety-features in the event of imminent roll-over, for example a pyrotechnically released head protector. In such a case, the foreign object recited in the appended claims would be constituted by the road surface.

## Claims

1. A system (12) for determining whether and/or when to activate a safety-related feature (14, 44) of a vehicle (10) in the event of an imminent collision between the vehicle and a foreign object (16), said system comprising:
detecting means (18, 18') for determining the position of the foreign object (16) relative to the vehicle (10) and for determining the relative velocity between the vehicle and the foreign object, and
a system control unit (20) arranged to communicate with said detecting means (18, 18') to receive data relating to said position and said relative velocity and, based on at least some of said data, to determine whether and/or when to emit a signal to activate said safety-related feature (14, 44),
wherein said system control unit (20) is arranged to dynamically set a discrimination factor dependent on at least some of said data to thereby vary, dependent on at least some of said data, the passage of time from receiving said data to emitting said signal to activate said safety-related feature (14, 44), **characterised in** the system control unit (20) being arranged to be provided with data to evaluate if a driver's foot is on a pedal (44) and to, upon calculation of the risk for acceleration-related injuries or intrusion of the pedal, where appropriate, emit a signal to activate a safety-related feature in the form of an actuator (46) for releasing and/or retracting said pedal (44), and activate automatic emergency braking.

2. The system as claimed in claim 1, wherein said discrimination factor is a threshold determination (34, 36, 38).

3. The system as claimed in claim 2, wherein the system control unit is arranged to select between a plurality of threshold determinations dependent on said relative velocity.

4. The system as claimed in claim 2 or 3, wherein each threshold determination (34, 36, 38) comprises signal emission time delays dependent on the determined position of the foreign object (16) relative to the vehicle (10).

5. The system, as claimed in any one of the preceding claims, wherein said detecting means (18, 18') are capable of detecting, and distinguishing between, a full frontal collision, a corner-to-corner collision and an offset collision.

6. The system as claimed in claim 5 when dependent on claim 4, wherein each threshold determination (34, 36, 38) comprises a dedicated signal emission time delay for each of a detected full frontal collision, a corner-to-corner collision and an offset collision.

7. The system as claimed in claim 5, wherein said detecting means comprises at least one sensor (18') for providing x-direction acceleration measurement to said system control unit (20).

8. Use of the system as claimed in any one of the preceding claims for releasing and/or retracting a foot-actuated pedal (44) in a vehicle.

9. A method for determining whether and/or when to activate a safety-related feature (14, 44) of a vehicle (10) in the event of an imminent collision between the vehicle and a foreign object (16), said method comprising the steps of:
determining the position of the foreign object relative to the vehicle and the relative velocity between the vehicle and the foreign object;
communicating data relating to said position and said relative velocity to a system control unit (20);
operating said system control unit to determine on the basis of at least some of said data whether and/or when to emit a signal to activate said safety-related feature (14, 44),
whereby said system control unit (20) dynamically sets a discrimination factor dependent on at least some of said data to thereby vary, dependent on at least some of said data, the passage of time from receiving said data to emitting said signal to activate said safety-related feature (14, 44), **characterised in** the method including the steps of providing the system control unit (20) with data to evaluate if a driver's foot is on a pedal (44);
calculating the risk for acceleration-related injuries or intrusion of the pedal; where appropriate, having the system control unit emit a signal to activate a safety-related feature in the form of an actuator (46) for releasing and/or retracting said pedal (44), and having the system control unit (20) activate automatic emergency braking.

10. The method as claimed in claim 9, whereby said discrimination factor is set dependent on said relative velocity.

11. The method as claimed in claim 10, wherein said discrimination factor is a threshold determination (34, 36, 38) and the system control unit (20) selects between a plurality of threshold determinations dependent on said relative velocity.

12. The method as claimed in claim 11, whereby each threshold determination (34, 36, 38) comprises signal emission time delays dependent on the determined position of the foreign object (16) relative to the vehicle (10).

13. The method as claimed in any one of claims 9 to 12, whereby the step of determining the position of the foreign object relative to the vehicle includes detecting, and distinguishing between, a full frontal collision, a corner-to-corner collision and an offset collision.

14. The method as claimed in claim 13 when dependent on claim 12, whereby each threshold determination (34, 36, 38) comprises a dedicated signal emission time delay for each of a detected full frontal collision, a corner-to-corner collision and an offset collision.

15. The method as claimed in any one of claims 12 to 14, including the step of providing a first threshold determination (34) in which said signal emission time delays are infinite, and selecting said first threshold determination when said relative velocity lies within a first relative velocity range (28).

16. The method as claimed in claim 15, including the step of providing a second threshold determination (36) in which at least one of said signal emission time delays is less than infinite, and selecting said second threshold determination when said relative velocity lies within a second relative velocity range (30), said second relative velocity range being greater than said first velocity range (28).

17. The method as claimed in claim 16, including the step of providing a third threshold determination (38) in which said signal emission time delays are, on average, less than said signal emission time delays of said second threshold determination (36), and selecting said third threshold determination when said relative velocity lies within a third relative velocity range (32), said third relative velocity range being greater than said second velocity range (30).

18. The method as claimed in any one of claims 15 to 17, wherein said first relative velocity range (28) is from 0 to about 40 km/h.

19. The method as claimed in claim 18, wherein said second velocity range (30) is from about 41 km/h to about 50 km/h.

20. The method as claimed in any one of claims 12 to 19, wherein when said signal emission time delay is finite, it lies within the range of 20 ms to 100 ms.

21. The method as claimed in any one of claims 14 to 20, wherein said signal emission time delay for a full frontal collision is shorter than for a corner-to-corner collision and an offset collision.

## Patentansprüche

1. System (12), um zu bestimmen, ob und/oder wann ein sicherheitsbezogenes Merkmal (14, 44) eines Fahrzeugs (10) im Fall einer drohenden Kollision zwischen dem Fahrzeug und einem Fremdobjekt (16) aktiviert werden soll, wobei das System umfasst:
Erfassungsmittel (18, 18'), die die Position des Fremdobjekts (16) in Bezug auf das Fahrzeug (10) bestimmen und die Relativgeschwindigkeit zwischen dem Fahrzeug und dem Fremdobjekt bestimmen, und
eine Systemsteuereinheit (20), die so beschaffen ist, dass sie mit den Erfassungsmitteln (18, 18') kommuniziert, um Daten bezüglich der Position und der Relativgeschwindigkeit zu empfangen und um anhand wenigstens einiger dieser Daten zu bestimmen, ob und/oder wann ein Signal zum Aktivieren des sicherheitsbezogenen Merkmals (14, 44) ausgesendet werden soll,
wobei die Systemsteuereinheit (20) so beschaffen ist, dass sie in Abhängigkeit von wenigstens einigen der Daten einen Diskriminierungsfaktor dynamisch setzt, um **dadurch** in Abhängigkeit von wenigstens einigen der Daten den Zeitverlauf zwischen dem Empfang der Daten und dem Aussenden des Signals zum Aktivieren des sicherheitsbezogenen Merkmals (14, 44) zu variieren, **dadurch gekennzeichnet, dass** die Systemsteuereinheit (20) so beschaffen ist, dass sie mit Daten versehen ist, um zu bewerten, ob sich der Fuß eines Fahrers auf einem Pedal (44) befindet, und um bei Berechnung der Gefahr beschleunigkeitsbezogener Verletzungen oder Beeinträchtigungen durch das Pedal gegebenenfalls ein Signal zum Aktivieren eines sicherheitsbezogenen Merkmals in Form eines Aktors (46) zum Freigeben und/oder Zurückziehen des Pedals (44) auszusenden und eine automatische Notbremsung zu aktivieren.

2. System nach Anspruch 1, bei dem der Diskriminierungsfaktor eine Schwellenwertbestimmung (34, 36, 38) ist.

3. System nach Anspruch 2, bei dem die Systemsteuereinheit so beschaffen ist, dass sie zwischen mehreren Schwellenwertbestimmungen in Abhängigkeit von der Relativgeschwindigkeit auswählt.

4. System nach Anspruch 2 oder 3, bei dem jede Schwellenwertbestimmung (34, 36, 38) Signalaussende-Zeitverzögerungen umfasst, die von der bestimmten Position des Fremdobjekts (16) relativ zu dem Fahrzeug (10) abhängen.

5. System nach einem der vorhergehenden Ansprüche, bei dem die Diskriminierungsmittel (18, 18') eine volle Frontalkollision, eine Eck-an-Eck-Kollision und eine versetzte Kollision erfassen und zwischen ihnen unterscheiden können.

6. System nach Anspruch 5, wenn abhängig von Anspruch 4, bei dem die Schwellenwertbestimmung (34, 36, 38) eine bestimmte Signalaussende-Zeitverzögerung für die erfasste volle Frontalkollision bzw. die erfasste Eck-an-Eck-Kollision bzw. die erfasste versetzte Kollision umfasst.

7. System nach Anspruch 5, bei dem die Erfassungsmittel wenigstens einen Sensor (18') aufweisen, der für die Systemsteuereinheit (20) eine Beschleunigungsmessung in x-Richtung bereitstellt.

8. Verwendung des Systems nach einem der vorhergehenden Ansprüche, um ein fußbetätigtes Pedal (44) in einem Fahrzeug freizugeben und/oder zurückzuziehen.

9. Verfahren, um zu bestimmen, ob und/oder wann ein sicherheitsbezogenes Merkmal (14, 44) eines Fahrzeugs (10) bei einer drohenden Kollision zwischen dem Fahrzeug und einem Fremdobjekt (16) aktiviert werden soll, wobei das Verfahren die folgenden Schritte umfasst:
Bestimmen der Position des Fremdobjekts relativ zu dem Fahrzeug und der Relativgeschwindigkeit zwischen dem Fahrzeug und dem Fremdobjekt;
Übermittlung von Daten bezüglich der Position und der Relativgeschwindigkeit an eine Systemsteuereinheit (20);
Betrieb der Systemsteuereinheit, damit sie anhand wenigstens einiger der Daten feststellt, ob und/oder wann ein Signal zum Aktivieren des sicherheitsbezogenen Merkmals (14, 44) ausgesendet werden soll,
wobei die Systemsteuereinheit (20) einen Diskriminierungsfaktor in Abhängigkeit von wenigstens einigen der Daten dynamisch setzt, um **dadurch** in Abhängigkeit von wenigstens einigen der Daten den Zeitverlauf zwischen dem Empfang der Daten und dem Aussenden des Signals zum Aktivieren des sicherheitsbezogenen Merkmals (14, 44) zu variieren, **dadurch gekennzeichnet, dass** das Verfahren die folgenden Schritte umfasst: Versehen der Systemsteuereinheit (20) mit Daten, um zu bewerten, ob sich ein Fuß des Fahrers auf einem Pedal (44) befindet;
Berechnen der Gefahr von beschleunigkeitsbezogenen Verletzungen oder Beeinträchtigungen durch das Pedal;
gegebenenfalls Veranlassen der Systemsteuereinheit, ein Signal zum Aktivieren des sicherheitsbezogenen Merkmals in Form eines Aktors (46) zum Freigeben und/oder Zurückziehen des Pedals (44) auszusenden, und
Veranlassen der Systemsteuereinheit (20), eine automatische Notbremsung zu aktivieren.

10. Verfahren nach Anspruch 9, bei dem der Diskriminierungsfaktor in Abhängigkeit von der Relativgeschwindigkeit gesetzt wird.

11. Verfahren nach Anspruch 10, bei dem der Diskriminierungsfaktor eine Schwellenwertbestimmung (34, 36, 38) ist und die Systemsteuereinheit (20) zwischen mehreren Schwellenwertbestimmungen in Abhängigkeit von der Relativgeschwindigkeit auswählt.

12. Verfahren nach Anspruch 11, bei dem jede Schwellenwertbestimmung (34, 36, 38) Signalaussende-Zeitverzögerungen umfasst, die von der bestimmten Position des Fremdobjekts (16) relativ zu dem Fahrzeug (10) abhängen.

13. Verfahren nach einem der Ansprüche 9 bis 12, bei dem der Schritt des Bestimmens der Position des Fremdobjekts relativ zu dem Fahrzeug das Erfassen einer vollen Frontalkollision, einer Eck-an-Eck-Kollision und einer versetzten Kollision und das Unterscheiden zwischen ihnen umfasst.

14. Verfahren nach Anspruch 13, wenn abhängig von Anspruch 12, bei dem jede Schwellenwertbestimmung (34, 36, 38) eine bestimmte Signalaussende-Zeitverzögerung für eine erfasste volle Frontalkollision bzw. eine erfasste Eck-an-Eck-Kollision bzw. eine erfasste versetzte Kollision umfasst.

15. Verfahren nach einem der Ansprüche 12 bis 14, das den Schritt umfasst, bei dem eine erste Schwellenwertbestimmung (34) ausgeführt wird, in der die Signalaussende-Zeitverzögerungen unendlich sind, und die erste Schwellenwertbestimmung ausgewählt wird, wenn die Relativgeschwindigkeit in einem ersten Relativgeschwindigkeitsbereich (28) liegt.

16. Verfahren nach Anspruch 15, das den folgenden Schritt umfasst:
Vorsehen einer zweiten Schwellenwertbestimmung (36), in der wenigstens eine der Signalaussende-Zeitverzögerungen kleiner als unendlich ist, und
Auswählen der zweiten Schwellenwertbestimmung, wenn die Relativgeschwindigkeit in einem zweiten Relativgeschwindigkeitsbereich (30) liegt, wobei der zweite Relativgeschwindigkeitsbereich größer als der erste Relativgeschwindigkeitsbereich (28) ist.

17. Verfahren nach Anspruch 16, das den folgenden Schritt umfasst:
Vorsehen einer dritten Schwellenwertbestimmung (38), in der die Signalaussende-Zeitverzögerungen im Durchschnitt kleiner als die Signalaussende-Zeitverzögerungen der zweiten Schwellenwertbestimmung (36) sind, und Auswählen der dritten Schwellenwertbestimmung, wenn die Relativgeschwindigkeit in einem dritten Relativgeschwindigkeitsbereich (32) liegt, wobei der dritte Relativgeschwindigkeitsbereich größer als der zweite Relativgeschwindigkeitsbereich (30) ist.

18. Verfahren nach einem der Ansprüche 15 bis 17, bei der der erste Relativgeschwindigkeitsbereich (28) von null bis etwa 40 km/h geht.

19. Verfahren nach Anspruch 18, bei dem der zweite Geschwindigkeitsbereich (30) von etwa 41 km/h bis etwa 50 km/h geht.

20. Verfahren nach einem der Ansprüche 12 bis 19, bei dem die Signalaussende-Zeitverzögerung dann, wenn sie endlich ist, im Bereich von 20 ms bis 100 ms liegt.

21. Verfahren nach einem der Ansprüche 14 bis 20, bei dem die Signalaussende-Zeitverzögerung für eine volle Frontalkollision kürzer als für eine Eck-an-Eck-Kollision und für eine versetzte Kollision ist.

## Revendications

1. Système pour déterminer s'il faut activer et/ou à quel moment le faire, un élément important pour la sécurité (14, 44) d'un véhicule (10) en cas de collision imminente entre le véhicule et un objet étranger (16), ledit système comprenant :
des moyens de détection (18, 18') pour déterminer la position de l'objet étranger (16) par rapport au véhicule (10) et pour déterminer la vitesse relative entre le véhicule et l'objet étranger, et
une unité de commande du système (20) disposée pour communiquer avec lesdits moyens de détection (18, 18') pour recevoir des données concernant ladite position et ladite vitesse relative et, en se basant sur au moins certaines desdites données, pour déterminer si et/ou quand il faut émettre un signal pour activer ledit élément important pour la sécurité (14, 44),
dans lequel ladite unité de commande du système (20) est disposée pour établir dynamiquement un facteur de discrimination dépendant de, au moins, certaines desdites données pour faire varier en fonction de celles-ci, en fonction d'au moins certaines desdites données, le temps écoulé entre la réception desdites données et l'émission dudit signal pour activer ledit élément important pour la sécurité (14, 44), **caractérisé par le fait que**, l'unité de commande du système (20) étant disposée de façon à recevoir des données pour évaluer si le pied du conducteur est sur la pédale (44) et, après calcul du risque des dommages corporels liés à l'accélération ou à l'enfoncement de la pédale, à, lorsque cela s'avère approprié, émettre un signal pour activer un élément important pour la sécurité sous la forme d'un actionneur (46) pour relâcher et/ou rétracter ladite pédale, et activer le freinage d'urgence automatique.

2. Système tel que revendiqué dans la revendication 1, dans lequel ledit facteur de discrimination est une détermination du seuil (34, 36, 38).

3. Système tel que revendiqué dans la revendication 2, dans lequel l'unité de commande du système est arrangée pour faire une sélection entre une pluralité de déterminations de seuils en fonction de ladite vitesse relative.

4. Système tel que revendiqué dans la revendication 2 ou 3, dans lequel chaque détermination de seuil (34, 36, 38) comprend des délais de temps d'émission du signal en fonction de la position déterminée de l'objet étranger (16) par rapport au véhicule (10).

5. Système selon l'une quelconque des revendications précédentes, dans lequel lesdits moyens de détection (18, 18') sont capables de détecter et de faire la distinction entre, une collision frontale, et une collision angle contre angle et une collision décalée.

6. Système selon la revendication 5 lorsqu'elle dépend de la revendication 4, dans lequel chaque détermination de seuil (34, 36, 38) comprend un délai d'émission du signal spécifique pour chaque type de collision détecté, frontale, angle contre angle ou décalée.

7. Système selon la revendication 5, dans lequel lesdits moyens de détection comprennent au moins un capteur (18') pour fournir une mesure de l'accélération dans le sens de x à ladite unité de commande du système (20).

8. Utilisation du système tel que revendiqué dans l'une quelconque des revendications précédentes, pour relâcher ou rétracter la pédale à pied (44) dans un véhicule.

9. Procédé pour déterminer si et/ou quand activer l'élément important pour la sécurité (14, 44) d'un véhicule (10), en cas de collision imminente entre le véhicule et un objet étranger (16), ledit procédé comprenant les étapes consistant à :
déterminer la position de l'objet étranger par rapport au véhicule et la vitesse relative entre le véhicule et l'objet étranger ;
communiquer des données concernant ladite position et ladite vitesse relative à l'unité de commande du système (20) ;
faire fonctionner ladite unité de commande du système pour déterminer, sur la base d'au moins certaines desdites données, s'il faut et/ou quand émettre un signal pour activer ledit élément important pour la sécurité (14, 44),
ce qui permet à l'unité de commande du système (20) de fixer dynamiquement un facteur de discrimination dépendant d'au moins certaines desdites données, pour ainsi faire varier, en fonction d'au moins certaines desdites données, le temps écoulé entre la réception desdites données et l'émission dudit signal pour activer ledit élément important pour la sécurité (14, 44), **caractérisé par le fait que,** le procédé inclut les étapes qui consistent à fournir à l'unité de commande du système (20) des données pour évaluer si le pied du conducteur est sur la pédale (44) ;
calculer le risque de dommages corporels liés à l'accélération ou à l'enfoncement de la pédale ;
lorsque cela s'avère approprié, faire émettre par l'unité de commande du système un signal pour activer un élément important pour la sécurité sous la forme d'un actionner (46) pour relâcher et/ou rétracter ladite pédale (44), et
faire activer par l'unité de commande du système (20) le freinage d'urgence automatique.

10. Procédé selon la revendication 9, permettant de fixer ledit facteur de discrimination en fonction de ladite vitesse relative.

11. Procédé selon la revendication 10, dans lequel ledit facteur de discrimination est une détermination du seuil (34, 36, 38) et l'unité de commande du système (20) effectue une sélection parmi une pluralité de déterminations de seuils, en fonction de ladite vitesse relative.

12. Procédé selon la revendication 11, par lequel chaque détermination de seuil (34, 36, 38) comprend des délais d'émission du signal qui dépendent de la position déterminée de l'objet étranger (16) par rapport au véhicule (10).

13. Procédé selon l'une quelconque des revendications 9 à 12, par lequel l'étape consistant à déterminer la position de l'objet étranger par rapport au véhicule comprend la détection et la distinction entre une collision frontale, angle contre angle ou décalée.

14. Procédé selon la revendication 13 lorsqu'elle dépend de la revendication 12, par lequel chaque détermination de seuil (34, 36, 38) comprend un délai d'émission du signal spécifique pour chaque type de collision : frontale, angle contre angle et décalée.

15. Procédé selon l'une quelconque des revendications 12 à 14, comprenant l'étape qui consiste à fournir une première détermination de seuil (34) dans laquelle le délai d'émission du signal est infini, et à sélectionner ladite première détermination de seuil lorsque ladite vitesse relative se trouve dans une première plage de vitesses relatives (28).

16. Procédé selon la revendication 15, comprenant l'étape qui consiste à fournir une deuxième détermination de seuil (36) dans laquelle au moins un des délais d'émission du signal est inférieur à l'infini, et à sélectionner ladite deuxième détermination de seuil lorsque ladite vitesse relative se trouve dans une deuxième plage de vitesses relatives (30), ladite deuxième plage de vitesses relatives étant supérieure à ladite première plage de vitesses relatives (28).

17. Procédé selon la revendication 16, comprenant l'étape qui consiste à fournir une troisième détermination de seuil (38) dans laquelle les délais d'émission du signal sont, en moyenne, inférieurs aux dits délais d'émission du signal de ladite deuxième détermination du seuil (36), et à sélectionner ladite troisième détermination du seuil lorsque ladite vitesse relative se trouve dans une troisième plage de vitesses relatives (32), ladite troisième plage de vitesses relatives étant supérieure à ladite deuxième plage de vitesses (30).

18. Procédé selon l'une quelconque des revendications 15 à 17, dans lequel ladite première plage de vitesses relatives (28) est comprise entre 0 et environ 40 km/h.

19. Procédé selon la revendication 18, dans lequel ladite deuxième plage de vitesses relatives (30) est comprise entre environ 41 km/h et environ 50 km/h.

20. Procédé selon l'une quelconque des revendications 12 à 19, dans lequel lorsque ledit délai d'émission du signal est fini, il se trouve dans une plage allant de 20 ms à 100 ms.

21. Procédé selon l'une quelconque des revendications 14 à 20, dans lequel ledit délai d'émission du signal pour une collision frontale est plus court que pour une collision angle contre angle et que pour une collision décalée.
